# EUROPÄISCHE PATENTANMELDUNG

(11) **EP 3 037 721 A1**
(43) Veröffentlichungstag der Anmeldung: **29.06.2016**
(21) Anmeldenummer: 15192967.6
(22) Anmeldetag: 04.11.2015
(51) Int. Cl.: F21V 17/16, F21V 19/00, F21V 23/00, F21V 23/04, F21Y 115/10, F21S 8/04

(54) **SENSORGESTEUERTE LEUCHTENVORRICHTUNG**

(30) Priorität: 22.12.2014 DE 202014106207 U
(71) Anmelder: STEINEL GmbH, 33442 Herzebrock (DE)
(72) Erfinder: Möller, Thomas, 32049 Herford (DE)
(74) Vertreter: Behrmann, Niels

(57) **Zusammenfassung**

Die Erfindung betrifft eine sensorgesteuerte Leuchtenvorrichtung mit als Reaktion auf eine Bewegungs- und/oder Anwesenheitsdetektion von Mikrowellen-Sensormitteln aktivierbaren Leuchtmitteln (32), die mit den Mikrowellen-Sensormitteln (34) in einem gemeinsamen Gehäuse integriert vorgesehen sind, wobei die als Mehrzahl von LEDs (32) auf einem gemeinsamen Leuchtmittelträger (22) ausgebildeten Leuchtmittel zusammen mit einer Hochfrequenzelektronik- (34) sowie einer Antennenbaugruppe (50) der Mikrowellen-Sensormittel und einer zum Verbinden mit Netzspannung ausgebildeten Spannungsversorgungselektronik (36) der Leuchtmittel sowie der Mikrowellen-Sensormittel in einem bevorzugt schalenartig ausgebildeten Modulgehäuse (18, 20) gemeinsam so aufgenommen sind, dass Licht der aktivierten LEDs durch das zumindest abschnittsweise transparent oder transluzent ausgebildete Modulgehäuse austreten kann, ein von den Mikrowellen-Sensormitteln abgestrahltes und empfangenes Mikrowellensignal durch das Modulgehäuse hindurchtreten kann und der als Leiterplatte ausgebildete Leuchtmittelträger einen Boden- und/oder rückwärtigen Wandabschnitt des Modulgehäuses ausbildet, und wobei das Modulgehäuse Befestigungsmittel (24) zum Befestigen an einem Leuchtensockel (10) und/oder Lampenschirm der Leuchtenvorrichtung so aufweist, dass der Boden- bzw. rückwärtige Wandabschnitt des Modulgehäuses auf eine Trägerfläche (12) des Leuchtensockels bzw. Leuchtenschirms weist.

## Beschreibung

Die vorliegende Erfindung betrifft eine sensorgesteuerte Leuchtenvorrichtung nach dem Oberbegriff des Hauptanspruchs.

Derartige Vorrichtungen sind als sogenannte Radar-Sensorleuchten aus dem Stand der Technik allgemein bekannt; innerhalb eines Leuchtengehäuses und abgedeckt von einem Leuchtenschirm wird dabei ein üblicherweise als Glühlampe oder Entladungsleuchtmittel ausgestaltetes Leuchtmittel durch eine Mikrowellen-Sensorvorrichtung, welche gleichermaßen im Leuchteninneren und hinter dem Leuchtenschirm sitzt, aktiviert bzw. deaktiviert, wobei die Sensormittel einen Erfassungsbereich vor der Leuchtenvorrichtung auf Bewegung oder Anwesenheit eines Detektionsobjekts - etwa einer Person - überwachen und, prinzipbedingt, die zur Detektion eingesetzten Mikrowellen den Leuchtenschirm durchdringen können. Dabei bewirkt diese Radartechnologie neben zuverlässigen Detektionseigenschaften und Serientauglichkeit insbesondere auch den ästhetischen Vorteil, dass etwa bei Verwendung eines blickundurchlässigen, opaken Leuchtenschirms die eigentliche Sensorik in der Leuchte nicht sichtbar ist, also etwa einen ästhetischen Gesamteindruck einer gestalteten Leuchte - im Gegensatz zu den ansonsten bekannten, auf Infrarotbasis funktionierenden Sensorleuchten - nicht beeinträchtigt.

Insbesondere für den Massenmarkt werden die Baugruppen einer solchen, als oberbegrifflich und gattungsgemäß vorausgesetzten Vorrichtung weitgehend als Kunststoff-Spritzgussteile realisiert, wobei ein entsprechend den jeweiligen Erfordernissen ausgestalteter Lampenschirm dann entweder aus Glas oder selbst wiederum aus geeignet lichtdurchlässigem bzw. transmissivem Kunststoff realisiert sein kann.

Typische Probleme beim Entwurf und der konstruktiven Realisierung einer gattungsgemäßen Radar-Sensorleuchte liegen einerseits bei dem Wärmemanagement, also bei der Notwendigkeit, die vom Leuchtmittel erzeugte Wärme thermisch von der Radarsensorik zu entkoppeln, damit unerwünschte Beeinflussungen vermieden werden können. Zum anderen ist eine Anpassung der technischen Funktionskomponenten einer solchen Leuchtenvorrichtung, nämlich insbesondere des bzw. der Leuchtmittel und der Mikrowellen-Sensormittel an jeweilige Leuchtengestaltungen, nicht unproblematisch, denn je nach beabsichtigtem Einsatzzweck - etwa für den Innen- oder den Außenbereich-, Anzahl und (Licht-)Leistung der zu verwendenden Leuchtmittel und der Form bzw. der Befestigung von Gehäuse und Leuchtenschirm ergeben sich jeweils verschiedene Designbedingungen, welche sorgfältig aufeinander abgestimmt werden müssen und typischerweise erfordern, dass ein konstruktiver Aufbau einer solchen bekannten Leuchtenvorrichtung entsprechend den genannten Designbedingungen und anderen Varianten stets neu entworfen werden muss.

Als weiteres Problem kommt hinzu, dass ein Zugang eines Benutzers bzw. Installateurs zum Leuchteninnenraum (etwa bei abgenommenem Leuchtenschirm) ermöglicht werden muss, welcher etwa ein Austauschen eines defekten oder verbrauchten Leuchtmittels ermöglicht, darüber hinaus auch etwa ein Zugang zu Stellknöpfen, Reglern oder dergleichen Stellmitteln gestattet sein muss, mit welchem der Benutzer, an dem jeweiligen Einsatzort, typische Betriebsparameter einstellen kann, wie etwa eine gewünschte Reichweite, eine Ansprechempfindlichkeit des Sensors, eine Helligkeitsschwelle einer Umgebungshelligkeit für die Leuchtmittelaktivierung, eine (Mindest-)Leuchtdauer der aktivierten Leuchtmittel u.v.m.. Gerade wiederum in einem gattungsgemäßen Mikrowellen-Sensorkontext bietet es sich nämlich auch an, derartige Stellmittel - ästhetisch sinnvoll - im Lampeninneren anzuordnen, wiederum um eine vorteilhafte äußere Ästhetik (bei aufgesetztem Leuchtenschirm) nicht zu beeinträchtigen. Dies macht dann jedoch gattungsgemäß verschiedene Vorkehrungen notwendig, um etwa eine Gefahr für die Bedienperson bei geöffnetem Gehäuse auszuschließen.

Im Ergebnis zeigt sich damit, dass die als bekannt vorausgesetzte, gattungsbildende sensorgesteuerte Leuchtentechnologie auf Mikrowellenbasis zwar bewährt, technologisch vielfältig und funktionell ist, insbesondere jedoch im Hinblick auf Bedienungsfreundlichkeit, Großserien-Herstellbarkeit auch verschiedener Varianten und Flexibilität verbesserungsbedürftig ist.

Aufgabe der vorliegenden Erfindung ist es daher, eine sensorgesteuerte Leuchtenvorrichtung nach dem Oberbegriff des Hauptanspruchs im Hinblick auf ihre universelle Verwend- und Adaptierbarkeit, insbesondere auch ihre Eignung zur Ausgestaltung verschiedener Leuchtendesigns, Leuchtenformen und Leuchtengestaltungen, einfacher und flexibler zu gestalten, dabei insbesondere die ästhetische Variantenbreite nicht durch die Notwendigkeit extern sichtbarer Einsteller oder dergleichen Bedienmittel zu beeinträchtigen und darüber hinaus die technischen Voraussetzungen dafür zu schaffen, dass eine Radar-Sensorleuchte der gattungsgemäßen Art betriebssicher, mit langer Standzeit, ohne thermische Probleme und weitgehend automatisiert kostengünstig fertigbar realisiert werden kann.

Die Aufgabe wird durch die sensorgesteuerte Leuchtenvorrichtung mit den Merkmalen des Hauptanspruchs gelöst. Vorteilhafte Weiterbildungen der Erfindung sind in den Unteransprüchen beschrieben. In erfindungsgemäß vorteilhafter Weise hat sich zunächst herausgestellt, dass eine Mehrzahl von (Leistungs-)LEDs als Leuchtmittel, angeordnet auf einer gemeinsamen, bevorzugt streifenförmig-rahmenartigen Leiterplatte als Leuchtmittelträger, ein idealer Weg ist, die elektrische Energieversorgung der Leuchtmittel zu bewirken, gleichzeitig, über die Leiterplatte, die weiter bevorzugt als SMD-Bauelemente ausgebildeten LEDs mechanisch zu halten und mittels der Leiterplatte für eine hinreichende Wärmeabfuhr zu sorgen. Im Rahmen der Erfindung wird dann dieser Leuchtmittelträger, zusammen mit einer sowohl die Mikrowellen-Sensormittel realisierenden Trägereinheit, als auch der Spannungsversorgungselektronik in einem Modulgehäuse gemeinsam aufgenommen, welches diese Komponenten bevorzugt schalenartig überdeckt und so eine Modulbaugruppe der sensorgesteuerten Leuchtenvorrichtung realisiert, welche sämtliche technischen Funktionalitäten - Leuchtmittel, Radarsensorik, elektrische Energieversorgung, darüber hinaus weiterbildungsgemäß auch die Einstellbarkeit - in einer weiterbildungsgemäß vorteilhaften Schale integriert, welche erfindungsgemäß sowohl für das Licht der aktivierten LEDs durchlässig (also geeignet transparent, opak oder diffus) ist, darüber hinaus, etwa in der bevorzugten Weiterbildung als Kunststoff-(Spritzguss-)Teil, auch problemlos durchlässig für die abgestrahlten bzw. empfangenen Mikrowellen der Radarsensorik ist. Konstruktiv sieht dabei die Erfindung vor, dass die Leiterplatte einen Bodenabschnitt bzw. einen rückwärtigen Wandabschnitt dieses Modulgehäuses ausbildet, welches dann, im Rahmen der Erfindung, geeignet in beliebigen Leuchteneinsatzumgebungen angebracht werden kann, nämlich durch erfindungsgemäßes Festlegen an einer Trägerfläche eines Leuchtensockels bzw. Leuchtenschirms der Leuchtenvorrichtung.

Es wird deutlich, dass damit die vollständige technische Funktionalität sich auf das Modulgehäuse bzw. dessen Inhalt reduziert, während dieses Modul dann auf bzw. in nahezu beliebige Leuchtumgebungen, vorgegeben durch den Leuchtensockel bzw. den Leuchtenschirm, an- bzw. eingepasst werden kann; es ist erfindungsgemäß lediglich notwendig, diese mechanische Schnittstelle zur Befestigung vorzusehen. Vorteilhafte Konsequenz ist, dass ein Leuchtendesigner, etwa beim periodischen (z.B. jährlichen) Entwerfen von aktuellen, modischen Leuchtenkollektionen, nicht mehr seine ästhetische Arbeit mit technischen bzw. Sensorik-Erwägungen abgleichen und koordinieren muss, vielmehr wird das erfindungsgemäße Modulgehäuse samt Inhalt lediglich an bzw. in die gewünschte, durch Ausgestaltung des jeweiligen Leuchtensockels bzw. Leuchtenschirms ausgestaltete Trägerinfrastruktur gesetzt und erfüllt dann den gewünschten Sensor-Leuchtenzweck.

Es wird daraus wiederum deutlich, dass nicht nur die konstruktiven und ästhetischen Freiheiten beim Leuchtendesign bzw. einer Veränderung des Leuchtendesigns deutlich anwachsen, auch ermöglicht die vorliegende Erfindung durch Vereinheitlichung und Integration sämtlicher sensor- und leuchtentechnologischer Funktionalitäten im Modulgehäuse, dass dieses Modul in höher Stückzahl, damit mit potentiell hohem Automatisierungsgrad, entsprechend kostengünstig und qualitätssicher produziert werden kann. Dabei wird erfindungsgemäß der Vorteil der verwendeten LEDs als Leuchtmittel ausgenutzt, dass diese, mit typischerweise langen Leuchtzeiten, ein Austauschen bzw. Auswechseln vor dem Ende einer Lebensdauer des erfindungsgemäß geschaffenen Moduls nicht erforderlich machen, sodass insoweit die Einheit in einem montierten Zustand nicht geöffnet werden muss. Wiederum synergistisch sorgt die eingesetzte mikrowellenbasierte Sensortechnologie - welche weiterbildungsgemäß sowohl auf der Basis üblicher, als allgemein bekannt vorausgesetzte Doppler-Radartechnolgie als auch etwa auf der Basis bevorzugt breitbandiger Hochfrequenzimpulse realisiert sein kann - dafür, dass ein (Kunststoff-)Material der Modulgehäuseschale problemlos durchdrungen wird, mit dem vorteilhaften Effekt, dass die Schale für das Modul nicht nur den Licht- und Mikrowellendurchlass ermöglicht, sondern auch die enthaltene Elektronik zuverlässig schützt, etwa vor dem unerwünschten Eintreten von Staub oder Feuchtigkeit.

Im Ergebnis entsteht durch die vorliegende Erfindung in überraschend einfacher Weise eine sensorgesteuerte (Radar-)Leuchtenvorrichtung, welche die sich aus dem Stand der Technik ergebenden Probleme elegant löst, die Voraussetzung für eine in großer Variantenbreite und großen Stückzahlen herzustellende Leuchtentechnologie schafft und darüber hinaus hohe Betriebssicherheit mit besten technologischen Funktionalitäten kombiniert.

Insbesondere bei der bevorzugten Realisierung des Modulgehäuses als (geeignet lichtdurchlässige) Kunststoffschale ist es weiterbildungsgemäß vorteilhaft und bevorzugt, diese bevorzugt mittels Spritzgießtechnologie herzustellende Baugruppe randseitig, etwa mittels geeigneter Vorsprünge, Einschnitte oder dergleichen, so auszugestalten, dass ein einfaches, positionssicheres und dauerhaftes Realisieren der Befestigung am Leuchtensockel bzw. Leuchtenschirm ermöglicht ist; weiterbildungsgemäß etwa durch das Realisieren einer Schnapp- oder Rastverbindung, wobei zu diesem Zweck sowohl das Modulgehäuse, etwa am vorteilhaften Randbereich, kontinuierlich oder abschnittsweise, ebenso wie der Verbindungspartner in Form des Leuchtensockels bzw. Leuchtenschirms geeignete Verbindungsabschnitte, wie etwa Vorsprünge, Nasen, Nuten, Hinterschneidungen oder dergleichen aufweisen kann. Hier ist es wiederum besonders bevorzugt, gerade auch unter einem Gesichtspunkt einer Vermeidung von Gefährdungssituationen für ungeschulte Bedienpersonen, diese Schnapp- oder Rastverbindung so auszugestalten, dass ein Lösen der Verbindung nur in der Art eines Auf- bzw. Abbrechens und damit Zerstörens erfolgen kann; vorteilhafte Konsequenz ist, dass im Regelfall ein Benutzer dann bei einmal montierter Leuchte das Modulgehäuse nicht von seinem Verbindungspartner abnehmen wird (dies allerdings, aus den oben genannten Gründen, auch nicht abnehmen muss).

Sowohl aus Gründen einer verbesserten Lichtverteilung innerhalb des Modulgehäuses und dann auch im umgebenden späteren Einbaukontext der Leuchte, gleichermaßen aus Gründen einer verbesserten Wärmeableitung, ist es weiterbildungsgemäß bevorzugt und von der Erfindung umfasst, die Mehrzahl von den als Leuchtmittel eingesetzten LEDs randseitig, weiter bevorzugt randseitig umlaufend, im Modulgehäuse vorzusehen, wobei das Modulgehäuse sowohl im Hinblick auf die Randkontur eckig (also quadratisch, recht- oder vieleckig), als auch oval oder kreisförmig ausgestaltet sein kann. Insbesondere die Möglichkeit, die Kunststoffkomponenten durch Spritzgießen geeignet auszuformen, gestaltet hier fast beliebige Realisierungsformen. In der praktischen Realisierung würde dann sowohl die Spannungsversorgungselektronik mit den zugehörigen, teils voluminösen Bauelementen (etwa Kondensatoren) im Inneren, bezogen auf den Rand, vorgesehen sein, wie auch, wiederum weiterbildend, die Hochfrequenzelektronikbaugruppe sowie die Antennenbaugruppe eher zum Zentrum des Modulgehäuses angeordnet wird, wobei es hier wiederum noch weiter bevorzugt ist, die zum Vorsehen dieser Baugruppen vorteilhafte(n) Hochfrequenz-Leiterplatte(n) beabstandet von der (Leistungs-)Elektronikleiterplatte vorzusehen, insbesondere zum Zweck einer verbesserten Entkopplung. Konkret würde etwa eine Hochfrequenzelektronik-Leiterplatte, etwa selbst mit aufsitzendem Antennenabschnitt, parallel zur LED- und Leistungselektronik-Leiterplatte auf dieser montiert vorzusehen sein, die Gesamtanordnung dann, in der bevorzugten Ausführungsform, schalenartig abgedeckt vom lichtdurchlässigen Modulgehäuse.

Um eine flexible Verbindung mit vorhandener Spannungsversorgungsinfrastruktur zu ermöglichen, ist es weiterbildend vorgesehen, das Modulgehäuse mit einem geeigneten Ausschnitt bzw. einer Abflachung zu versehen, wobei weiter bevorzugt in diesem Bereich dann, zur Spannungsversorgung, geeignete Anschlüsse, etwa Lüsterklemmen oder dergleichen netzspannungstaugliche Verbinder, vorgesehen sind. Einbauseitig, d.h. an bzw. in dem zugeordneten Leuchtensockel bzw. Leuchtenschirm muss dann lediglich ein Durchbruch zum Hindurchführen eines am Einbauort üblicherweise vorhandenen Netzspannungskabels vorhanden sein, ohne dass etwa der Leuchtensockel irgendeine andere elektrische, sensor- oder lichttechnische Funktionalität erfährt, sodass, wie oben diskutiert, die volle Freiheit in der ästhetischen Ausgestaltung kombiniert ist mit geringstmöglich zusätzlichem technischem Aufwand.

Gleiches gilt auch für die weiterbildungsgemäß vorgesehene Möglichkeit, durch - üblicherweise manuell betätigbare - Stellknöpfe, Stellräder oder dergleichen Einstellmittel die gewünschten Erfassungs-, Sensor- und Leuchtparameter zu beeinflussen. Auch hier ist es vorteilhaft und bevorzugt, diese Einstellmittel (einzeln oder mehrfach) dem Sensorgehäuse zuzuordnen, etwa an einer beim Abnehmen eines Leuchtenschirms einfach zugänglichen Position, welche, außerhalb eines Schattenwurfs oder dergleichen Beeinträchtigung austretenden Lichts, gleichermaßen der Einstell- und Bedienperson eine betriebssichere, zuverlässige Einstellbarkeit ermöglicht.

Es wird dann das erfindungsgemäß realisierte Modulgehäuse in eine Leuchtenstruktur, etwa bestehend aus einem an einer Wand oder an einer Decke zu befestigenden und mit entsprechenden mechanischen Durchbrüchen oder dergleichen ausgestalteten Sockel und damit mechanisch zu verbindendem Leuchtenschirm kombiniert; dadurch lässt sich mit geringstmöglichem Aufwand nicht nur eine solche Beleuchtungsvorrichtung einfach und in hoher Stückzahl herstellen, auch ist eine designmäßige Veränderung, durch einfaches Austauschen von Sockel und/oder Leuchtenschirm, möglich, ohne dass die technische Leuchten- und Sensorfunktionalität in irgendeiner Weise beeinträchtigt wäre. Vielmehr macht auch die vorliegende Erfindung, hier in zusätzlich synergistischer Weise, Gebrauch von der Eigenschaft der Radar-Technologie, dann nicht nur das Modulgehäuse zu durchdringen, sondern auch den gegebenenfalls als Abschluss der Leuchte darauf aufgebrachten Leuchtenschirm, wiederum mit der vorteilhaften Wirkung, ästhetisch keinerlei Beeinträchtigung zuzulassen.

Weitere Vorteile, Merkmale und Einzelheiten ergeben sich aus der nachfolgenden Beschreibung bevorzugter Ausführungsbeispiele sowie anhand der Zeichnungen; diese zeigen in
- Fig. 1: eine Perspektivansicht auf eine sensorgesteuerte Leuchtenvorrichtung gemäß einem ersten Ausführungsbeispiel der Erfindung mit auf einer Trägerfläche eines Leuchtensockels befestigtem Modulgehäuse;
- Fig. 2: eine Draufsicht auf die Anordnung gemäß Fig. 1;
- Fig. 3: eine Explosionsdarstellung mit in Montagerichtung auseinander gezogener Darstellung der wesentlichen Baugruppen bzw. Funktionskomponenten im Ausführungsbeispiel der Fig. 1,2;
- Fig. 4: eine Perspektivansicht auf den schalenartigen Gehäusedeckel des Modulgehäuses im Ausführungsbeispiel der Fig. 1 bis 3;
- Fig.5: eine perspektivische Innenansicht auf die Modulgehäuseschale nach Fig. 4;
- Fig. 6: eine Perspektivansicht einer im Ausführungsbeispiel der Fig. 1 bis 3 eingesetzten Leiterplattenanordnung für die Leuchtmittel, die Spannungsversorgungselektronik sowie die Mikrowellen-Sensormittel und
- Fig. 7: eine perspektivische Schnittansicht durch das erste Ausführungsbeispiel gemäß Fig. 1 bis 3 zum Verdeutlichen des Zusammenwirkens der einzelnen Leuchtenkomponenten der Fig. 3 im montierten Zustand.

Ein flachzylindrischer, einstückig als Spritzgießteil aus einem Kunststoffmaterial realisierter Leuchtensockel 10 weist, geeignet auf seiner Bodenfläche 12 verteilt angeordnet, eine Mehrzahl von Befestigungs-Langlöchern 14 auf, mit welchen der Sockel (und die damit verbundenen Aggregate) an einer geeigneten Decken- oder Wandfläche durch ansonsten bekannte Schraub- bzw. Dübelverbindungen festgelegt werden kann. Ein mantelseitiger, leicht konisch aufgeweiteter umlaufender Randabschnitt 16 des Gehäusesockels eignet sich, um darauf - in den Figuren nicht gezeigt - einen Leuchtenschirm, etwa in Form einer planen oder gewölbten, für austretendes Licht transparenten Deckeleinheit abnehmbar aufzubringen.

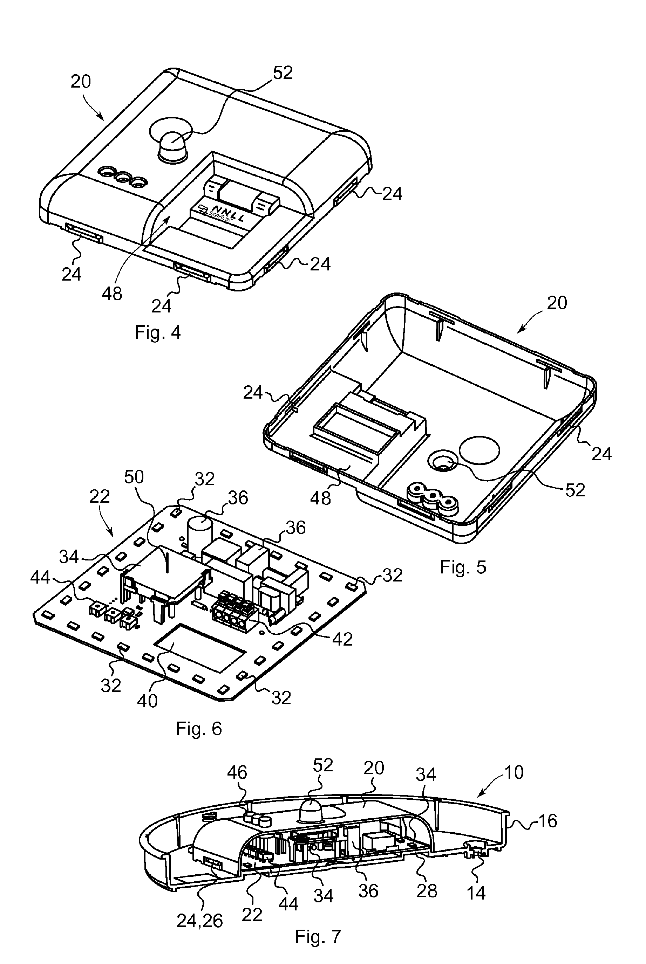

Wie die Figurendarstellungen verdeutlichen, ist im Zentrum auf dem Leuchtensockel 14 ein Modulgehäuse 18 befestigt, welche sämtliche beleuchtungs-, sensor- und stromversorgungstechnische Funktionalitäten der Sensorleuchte in sich vereint realisiert; insbesondere weist dieses Modulgehäuse 18 eine Modulschale 20, realisiert als Spritzgießteil und dargestellt in den Fig. 4 bzw. 5, auf, welche zum Abdecken einer Leiterplatteneinheit 22 (Fig. 6) ausgebildet ist und randseitig mit umlaufenden Schlitzen 24 als (einstückig eingebrachte) Befestigungsmittel so verbunden ist, dass über diese Schlitze und im Zusammenwirken mit angepassten, wiederum bevorzugt einstückig ansitzenden Vorsprüngen 26 eines Trägerabschnitts 28 der Sockeleinheit 10 eine Schnappverbindung realisiert werden kann, welche im gezeigten Ausführungsbeispiel und aus Sicherheitsgründen manuell und ohne eine Beschädigung der Anordnung aus Kunststoffteilen nicht mehr geöffnet werden kann.

Wie die Figuren erkennen lassen, weist die Gehäuseschale 20 und mithin das Modulgehäuse 18 eine i.W. quadratische Umfangskontur mit gerundeten Ecken auf, angepasst insoweit an die Trägerstruktur 28, welche - einstückig - aus dem Boden 12 der Sockelbaugruppe 10 herausgeformt ist.

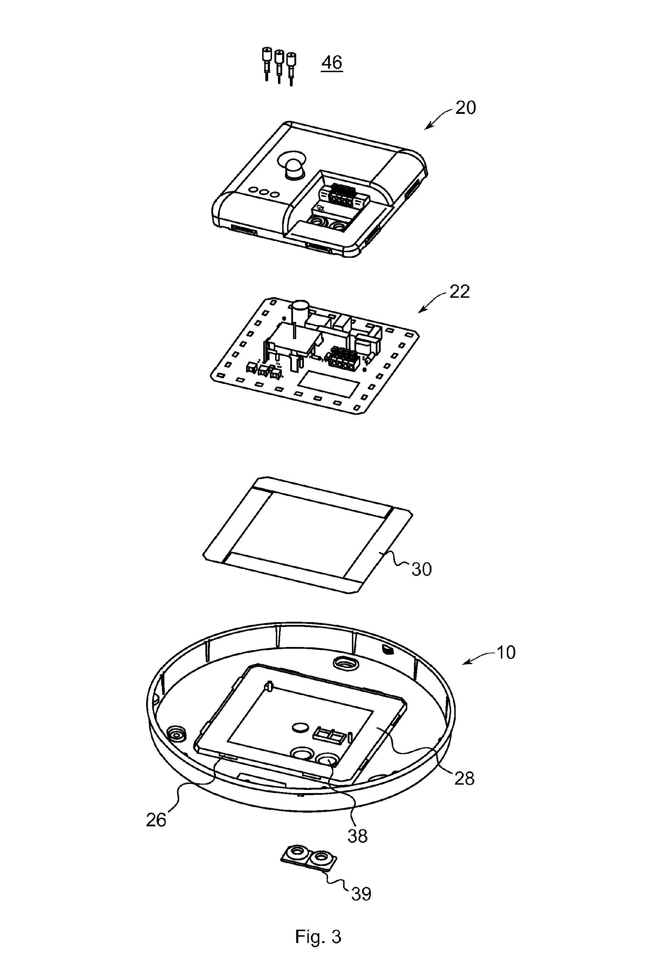

Ein Vergleich der Fig. 4 und 5 mit 6 zeigt zudem, dass ein umlaufendes Außenmaß der Leiterplatte 22 an eine lichte Innenweite der Schale 20 angepasst ist, so dass, vgl. insbesondere die Explosionsdarstellung der Fig. 3, die Schale 20 die Leiterplatte 22 übergreift und damit zum Ausbilden eines Moduls aufnimmt. Die so realisierte Anordnung ist dann, vgl. wiederum die Fig. 3, über eine (hier thermisch leitend bzw. ableitend ausgebildete) Klebefolienanordnung 30 mit dem Trägerabschnitt 28 verbunden, wobei die mechanische Verankerung insbesondere über das beschriebene schnappende bzw. rastende Zusammenwirken zwischen der Schlitzanordnung 24 am Gehäusedeckel mit bzw. in die Vorsprünge 26 des Sockels erfolgt.

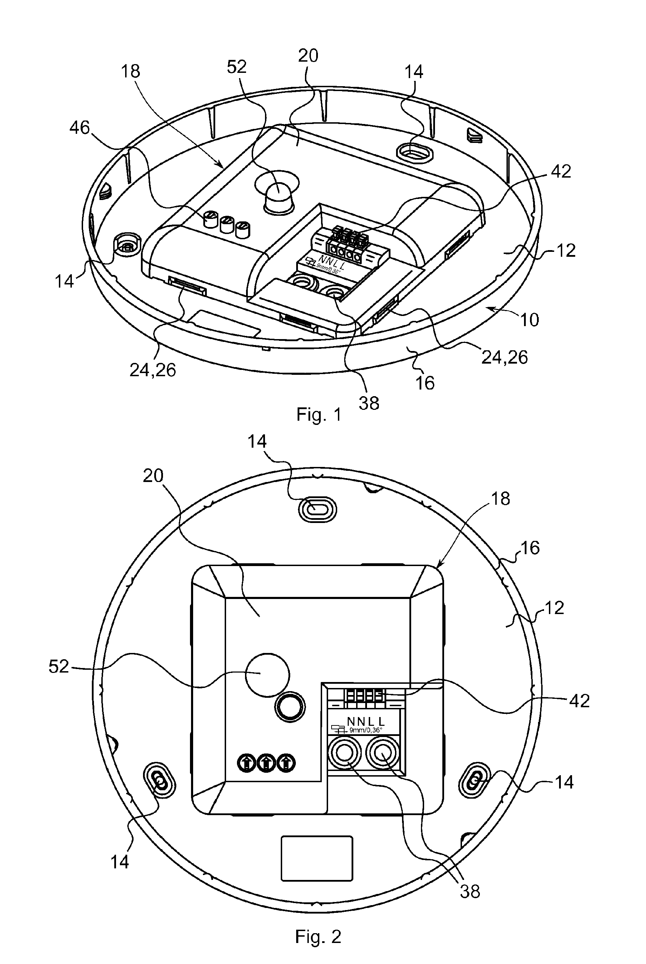

Aus der perspektivischen Draufsicht auf die Leiterplatte der Fig. 6 zeigt sich, dass Leuchtmittel in Form randseitig umlaufend angeordneter SMD-LEDs 32 in das Modulgehäuse 18 eingebracht sind, wobei eine Hochfrequenz-Sensorelektronik auf einer dafür vorgesehenen und von der Leiterplatte 22 beabstandet gehaltenen Hochfrequenz-Leiterplatte 34 montiert ist. Innerhalb der durch die LEDs beschriebenen Umrandung sind zudem Elektronik-Bauelemente 36, i.W. eine Stromversorgungselektronik sowohl für die Leuchtmittel als auch für die Hochfrequenzelektronik 34 realisierend, vorgesehen. Zum Verbinden mit Leitungsenden einer Netzspannungsversorgung, welche von extern durch die rückseitige Wand bzw. Trägerwand 12 und darin gebildete, mit Isolationselementen 39 versehenen Kabeldurchführungen 38 herangeführt werden kann, trägt die Leiterplatte, einem Zuleitungsausschnitt 40 benachbart, eine Lüsterklemmenbzw. Kabelverbinderanordnung 42. Schließlich lässt die Perspektivansicht der Fig. 6 noch eine - wiederum innerhalb der von den LEDs 32 beschriebenen Umrahmung vorgesehene - Stellregleranordnung 44 erkennen, welche in ansonsten bekannter Weise, durch manuelle Betätigung über aus der Gehäuseschale 20 herausgeführte Stellknöpfe 46, das Einstellen von Sensor- und/oder Leuchtenparametern, etwa eine Empfindlichkeitsschwelle für eine Sensorentfernung, eine Mindestleuchtdauer, eine Umgebungshelligkeitsschwelle oder dergleichen, gestattet. Wie diesbezüglich der Vergleich der Fig. 1, 3 und 6 verdeutlicht, sind die Betätigungsknöpfe 46 durch Durchbrüche in der Schale 20 so fluchtend gehalten, dass diese im Montagezustand der Baugruppen auf jeweilige Stellregler der Anordnung 44 greifen, welche wiederum in ansonsten bekannter Weise durch Verlöten auf der Leiterplatte befestigt sind.

Die Detailansicht der Modulgehäuseschale 20 (Fig. 1, 4, 5) verdeutlicht zudem, dass im Bereich des Leiterplattendurchbruchs 40, welcher die Kabeldurchführungen 38 für die Netzspannungsversorgung freilegt, eine ausschnittsartige Verflachung 48 in der Gehäuseschale vorgesehen ist, mit dem Zweck, die elektrische Kontaktierung mit Kabelenden der Netzspannungsversorgung zu ermöglichen, ohne dass die Gehäuseschale 20 abgenommen werden muss oder auf andere Weise das damit gebildete Modul geöffnet oder mit seinen elektrotechnischen Verbindungen beim Anschluss frei zugänglich wird.

Die Detailansichten insbesondere der Schale 20 und des Leuchtensockels 10 verdeutlichen zudem, dass - unter Nutzung der Spritzgießtechnologie und mit entsprechend anspruchsvollen Werkzeugen - sehr viele mechanische Funktionalitäten in wenige mechanische Baugruppen integriert werden können, wobei typischerweise ein farblich neutral gehaltenes Kunststoffmaterial, etwa ABS oder PC, ein geeignetes Spritzmaterial für die Gehäuseschale 10 ist, während es, vor dem Hintergrund der notwendigen Transmissivität für von den LEDs emittiertes Licht, die Modulgehäuseschale 20 vorbestimmte Transparenz- bzw. Transluzenzeigenschaften haben muss und entsprechend aus einem geeigneten lichtdurchlässigen Kunststoff gefertigt ist. Um, für Zwecke der verbesserten Mikrowellenabstrahlung bzw. der Aufnahme reflektierter Mikrowellen, optimierte Hochfrequenzbedingungen zu schaffen, erstreckt sich eine Antenne 50 aufwärts von der Hochfrequenzleiterplatte 34 und ist von einem aufwärts gewölbten Domabschnitt 52 der Gehäuseschale 20 abgedeckt.

Nach Montage der in Fig. 3 in der Explosionsdarstellung gezeigten Baugruppen bzw. Komponenten entsteht die kompakte, in der Schnittansicht der Fig. 7 erkennbare Lagen- bzw. Schichtanordnung, wobei, etwa im Hinblick auf eine Wärmeentwicklung der LED-Leuchtmittel 32, sowohl die geeignet dimensionierte Leiterplatte 22 wärmeableitend wirkt, als auch mittels der Verbindungsschicht 30 zum unterliegenden Sockelgehäuse eine gewisse Wärmeableitung ermöglicht ist.

Die vorstehend beschriebene Vorrichtung ist nicht auf die konkreten Realisierungsmerkmale und Details beschränkt; vielmehr bietet es sich im Rahmen der Erfindung an, sowohl die - nicht an der technischen Funktionalität beteiligten - Leuchtenelemente in Form des Sockels 10, ggf. eines damit verbundenen Leuchtenschirms, geeignet zu variieren und nahezu beliebig in der Form auszugestalten. Auch ist das eigentliche Modulgehäuse nicht auf die durch die Gehäuseschale 20 exemplarisch gezeigte quadratisch-deckelartige Form beschränkt. Auch hier eignen sich beliebige andere Formgebungen und Varianten, um in der erfindungsgemäßen Weise die Sensor-, Beleuchtungs- und Stromversorgungsfunktionalität zu integrieren und modulartig von den Sockel- bzw. Leuchtenschirmbaugruppen, welche selbst rein passiv sind, zu trennen. Umgekehrt wird deutlich, dass auch das Modul 18 selbst für das Befestigen bzw. mechanische Zusammenwirken mit einer geeigneten Sockel- und/oder Leuchtenschirmkombination vorgesehen ist und als solche erfindungsgemäß nicht für eine unmittelbare Befestigung oder Anbringung an einer Zielfläche, etwa einer Wand oder einer Decke, ausgebildet und vorgesehen ist.

## Patentansprüche

1. Sensorgesteuerte Leuchtenvorrichtung mit
als Reaktion auf eine Bewegungs- und/oder Anwesenheitsdetektion von Mikrowellen-Sensormitteln aktivierbaren Leuchtmitteln (32), die mit den Mikrowellen-Sensormitteln (34) in einem gemeinsamen Gehäuse integriert vorgesehen sind,
**dadurch gekennzeichnet, dass**
die als Mehrzahl von LEDs (32) auf einem gemeinsamen Leuchtmittelträger (22) ausgebildeten Leuchtmittel zusammen mit einer Hochfrequenzelektronik- (34) sowie einer Antennenbaugruppe (50) der Mikrowellen-Sensormittel und einer zum Verbinden mit Netzspannung ausgebildeten Spannungsversorgungselektronik (36) der Leuchtmittel sowie der Mikrowellen-Sensormittel in einem bevorzugt schalenartig ausgebildeten Modulgehäuse (18, 20) gemeinsam so aufgenommen sind, dass
Licht der aktivierten LEDs durch das zumindest abschnittsweise transparent oder transluzent ausgebildete Modulgehäuse austreten kann,
ein von den Mikrowellen-Sensormitteln abgestrahltes und empfangenes Mikrowellensignal durch das Modulgehäuse hindurchtreten kann und der als Leiterplatte ausgebildete Leuchtmittelträger einen Boden- und/oder rückwärtigen Wandabschnitt des Modulgehäuses ausbildet, und wobei das Modulgehäuse Befestigungsmittel (24) zum Befestigen an einem Leuchtensockel (10) und/oder Lampenschirm der Leuchtenvorrichtung so aufweist, dass der Boden- bzw. rückwärtige Wandabschnitt des Modulgehäuses auf eine Trägerfläche (12) des Leuchtensockels bzw. Leuchtenschirms weist.

2. Vorrichtung nach Anspruch 1, **dadurch gekennzeichnet, dass** die Befestigungsmittel (24) einstückig am Modulgehäuse, insbesondere an einem Randabschnitt einer Deckelschale (20) des Modulgehäuses, ausgebildet sind.

3. Vorrichtung nach Anspruch 1 oder 2, **dadurch gekennzeichnet, dass** die Befestigungsmittel zum Herstellen einer Schnapp- und/oder Rastverbindung des Modulgehäuses an einem Verbindungsabschnitt (26) der Trägerfläche ausgebildet sind.

4. Vorrichtung nach Anspruch 2 und 3, **dadurch gekennzeichnet, dass** der Randabschnitt der Deckelschale des Modulgehäuses mit einem Vorsprung (26), einer Nase, einer Nut und/oder einer Hinterschneidung des Verbindungsabschnitts rastend oder schnappend, bevorzugt zerstörungsfrei unlösbar, zusammenwirkt.

5. Vorrichtung nach einem der Ansprüche 1 bis 4, **dadurch gekennzeichnet, dass** der Leuchtmittelträger die Mehrzahl der bevorzugt zur Oberflächenmontage (SMD) ausgebildeten LEDs zumindest abschnittsweise randseitig im Modulgehäuse umlaufend aufweist.

6. Vorrichtung nach einem der Ansprüche 1 bis 5, **dadurch gekennzeichnet, dass** die Spannungsversorgungselektronik mit den LEDs gemeinsam auf der Leiterplatte so vorgesehen ist, dass die LEDs Bauelemente der Spannungsversorgungselektronik zumindest abschnittsweise randseitig umschließen.

7. Vorrichtung nach einem der Ansprüche 1 bis 6, **dadurch gekennzeichnet, dass** das Modulgehäuse einen zum Verbinden der Spannungsversorgungselektronik mit Leitungsenden einer externen Netzspannungsversorgung ausgebildeten Anschlussbereich (42) aufweist, der bevorzugt in einem abgeflachten und/oder ausgeschnittenen Bereich (48) des Modulgehäuses ausgebildet ist.

8. Vorrichtung nach Anspruch 7, **dadurch gekennzeichnet, dass** dem Anschlussbereich mindestens ein Durchbruch (38) durch die Trägerfläche des Leuchtensockels bzw. Leuchtenschirms benachbart zugeordnet ist.

9. Vorrichtung nach einem der Ansprüche 1 bis 8, **dadurch gekennzeichnet, dass** die Hochfrequenzelektronikbaugruppe und/oder die Antennenbaugruppe im Modulgehäuse auf einer Trägereinheit, insbesondere Hochfrequenzleiterplatte (34), vorgesehen ist, die auf der die LEDs und die Spannungsversorgungselektronik tragenden Leiterplatte (22) beabstandet montiert ist.

10. Vorrichtung nach einem der Ansprüche 1 bis 9, **dadurch gekennzeichnet, dass** die Mikrowellen-Sensormittel mindestens ein durch eine Bedienperson betätigbares Stellelement (46) für veränderbare Beleuchtungs-, Bewegungs- und/oder Anwesenheitsdetektionsparameter so zugeordnet aufweist, dass das Stellelement von außerhalb einer lichtaustrittsseitigen Fläche des Modulgehäuses betätigt werden kann, insbesondere in die Fläche integriert ist oder durch die Fläche hindurchragt.

11. Vorrichtung nach einem der Ansprüche 1 bis 10, **dadurch gekennzeichnet, dass** das Modulgehäuse auf einem randseitig das Modulgehäuse zumindest abschnittsweise umschließenden Leuchtensockel (10) montiert ist und
ein am Leuchtensockel abnehmbar ansitzender Leuchtenschirm einen das Modulgehäuse aufnehmenden Innenraum des Leuchtsockels zumindest abschnittsweise verschließen kann.

12. Vorrichtung nach Anspruch 11, **dadurch gekennzeichnet, dass** der Leuchtenschirm zum Ausbringen des Lichts der aktivierten LEDS zumindest abschnittsweise opak, diffus und/oder blickundurchlässig ausgestaltet ist.
